# EUROPEAN PATENT APPLICATION

(11) **EP 3 361 608 A1**
(43) Date of publication of application: **15.08.2018**
(21) Application number: 18156028.5
(22) Date of filing: 09.02.2018
(51) Int. Cl.: H02K 11/33, H02K 3/52, H02K 11/215, H02K 5/22

(54) **MOTOR AND ELECTRICAL EQUIPMENT**

(30) Priority: 10.02.2017 JP 2017023490
(71) Applicant: Nidec Corporation, Kyoto-shi, Kyoto 601-8205 (JP)
(72) Inventor: ISHIDA, Ryosuke, Kyoto-shi, Kyoto 601-8205 (JP)
(74) Representative: Stöckeler, Ferdinand

(57) **Abstract**

A motor includes a rotor including a rotary shaft that extends in the vertical direction, a stator (1) that faces the rotor (2), a bearing (41, 42) for supporting the rotary shaft for rotation, a bearing holder (4) for holding the bearing, a bracket (5) for holding the bearing holder, and a circuit board (7) having electronic components mounted thereon. The electronic components include a converter, an inverter, and a detection unit. The detection unit detects the rotation angle of the rotor on the basis of an induced voltage generated in the stator due to rotation of the rotor. The bracket (5) includes a holding member that holds the lower end of the bearing holder (4). The circuit board (7) is disposed under the holding member in the axial direction. The electronic components are disposed on the lower surface of the circuit board (7).

## Description

### Field of the Invention

The present invention relates to a motor and electrical equipment.

Home appliances, such as a hair dryer, are connected to a source of domestic AC power. Accordingly, a motor mounted in the home appliance includes a board having a power conversion device mounted thereon and a board having a drive circuit mounted thereon. The power conversion device converts the power supplied from the power source to a DC current. The drive circuit supplies the power to the stator and rotationally drives the rotor.

For example, according to Japanese Unexamined Patent Application Publication No. 10-322973, a power module and a printed circuit board is provided so as to be arranged in the axial direction of the rotary shaft. The power module constitutes a power circuit of an inverter device serving as a power conversion device. The printed circuit board has electronic components mounted thereon. The electronic components constitute circuits other than the power circuit (for example, a drive circuit and a DC power supply circuit).

### SUMMARY OF THE INVENTION

However, in the electric motor described in Japanese Unexamined Patent Application Publication No. 10-322973, a board having the power module mounted thereon is provided separately from the printed circuit board. Thus, the number of members increases, and the manufacturing cost of the motor increases. In addition, the size of the parts used in the DC power supply circuit (especially, electrolytic capacitors) is relatively large. Consequently, when a part is mounted on a surface of the print circuit board facing the stator side in the axial direction of the rotary shaft, it is necessary to dispose the printed circuit board at a position sufficiently away from the stator. For this reason, a bracket for accommodating the printed circuit board tends to increase in size. In particular, the size in the axial direction increases and, thus, the strength of the bracket that holds the printed circuit board may become insufficient. In addition, if the printed circuit board is away from the stator, breaking of a lead wire that electrically connects the circuit formed on the printed circuit board to the coil of the stator easily occurs.

According to the present invention, an exemplary motor includes a rotor including a rotary shaft that extends in the vertical direction, a stator that faces the rotor, a bearing for supporting the rotary shaft for rotation, a bearing holder for holding the bearing, a bracket for holding the bearing holder, and a circuit board having electronic components mounted thereon. The electronic components include a converter, an inverter, and a detection unit. The detection unit detects the rotation angle of the rotor on the basis of an induced voltage generated in the stator due to rotation of the rotor. The bracket includes a holding member that holds the lower end of the bearing holder. The circuit board is disposed under the holding member in the axial direction. The electronic components are disposed on the lower surface of the circuit board.

The exemplary motor according to the present invention can reduce the size of the motor and increases the reliability of a product including the motor.

The above and other elements, features, steps, characteristics and advantages of the present discloser will become more apparent from the following detailed description of the preferred embodiments with reference to the attached drawings.

### BRIEF DESCRIPTION OF THE DRAWINGS

Fig. 1 is a longitudinal sectional view illustrating an example of the configuration of an air blowing device using a motor;
Fig. 2 is a top perspective view of the air blowing device;
Fig. 3 is a top perspective view of the air blowing device with an impeller removed;
Fig. 4 is a bottom perspective view of the air blowing device;
Fig. 5 is a bottom perspective view of the air blowing device with a circuit board removed;
Fig. 6 is a top view of the air blowing device;
Fig. 7 is a bottom view of the air blowing device;
Fig. 8 is a bottom perspective view of an insulator;
Fig. 9 is a bottom view of the insulator;
Fig. 10 is an enlarged bottom view illustrating an example of the structure in which the first protrusions and the second protrusions are in contact with a support member; and
Fig. 11 is a longitudinal sectional view illustrating an example of the configuration of a dryer having the air blowing device mounted therein.

### DETAILED DESCRIPTION OF THE PREFERRED EMBODIMENTS

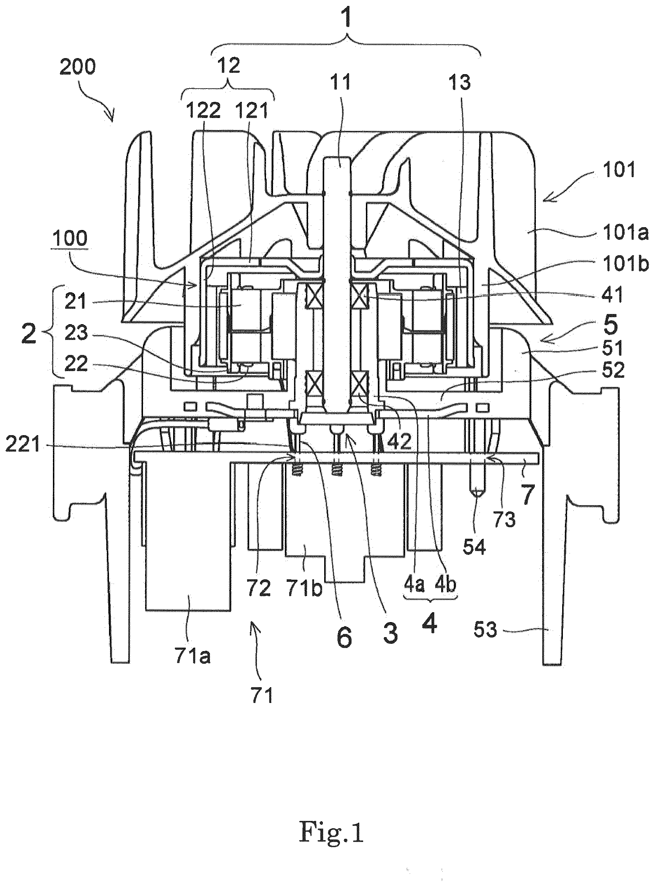

Exemplary embodiments of the present invention are described below with reference to the accompanying drawings. As used herein, in regard to a motor 100, the direction in which the rotary shaft of a rotor 1 (refer to a shaft 11 in Fig. 1 described below) extends is simply referred to as an "axial direction". In addition, in the axial direction, the direction extending from a circuit board 7 to an impeller 101 is simply referred to as an "upward" direction, and the direction extending from the impeller 101 to the circuit board 7 is simply referred to as a "downward" direction. Furthermore, a surface of each of constituent elements that faces upward in the axial direction is referred to as an "upper surface", and a surface that faces downward in the axial direction is referred to as a "lower surface".

The radial direction of the shaft 11 is simply referred to as a "radial direction", and the circumferential direction around the shaft 11 is simply referred to as "circumferential direction". In addition, in the radial direction, the direction extending towards the shaft 11 is simply referred to as an "inward" direction, and the direction extending away from the shaft 11 is simply referred to as an "outward" direction. Furthermore, among the surfaces of each of the constituent elements, the side surface facing in the inward radial direction is referred to as an "inside surface", and the side surface facing in the outward radial direction is referred to as an "outside surface".

In regard to an apparatus or a device including the motor 100, the direction of the air flow sent out by an air blowing device 200 is referred to as "air flow direction". In addition, in the air flow direction, the direction from the upstream to downstream is simply referred to as a "forward" direction, and the direction from the downstream to upstream is simply referred to as a "backward" direction.

The directions and surfaces described above do not indicate the positional relationship and the directions when the constituent elements are incorporated into an actual device.

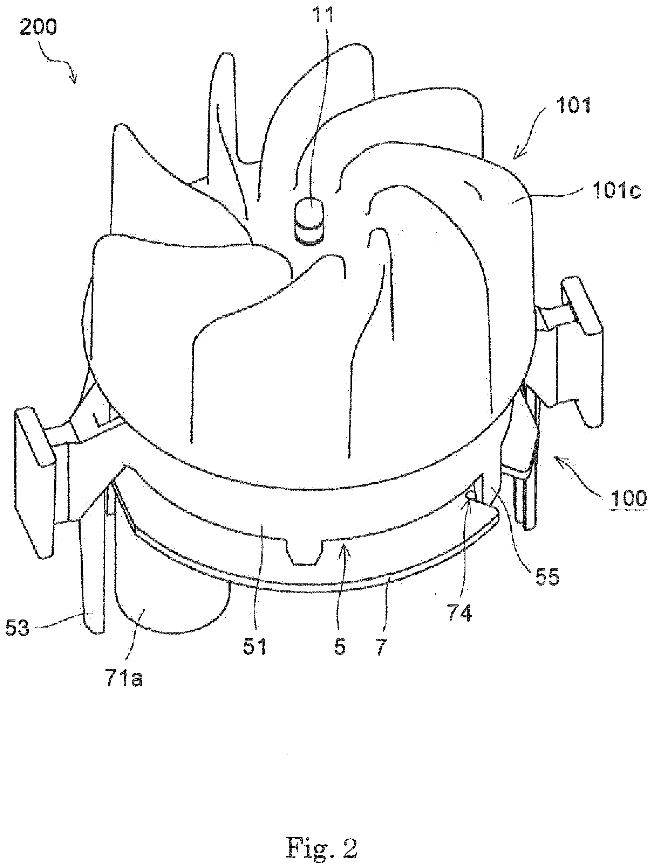

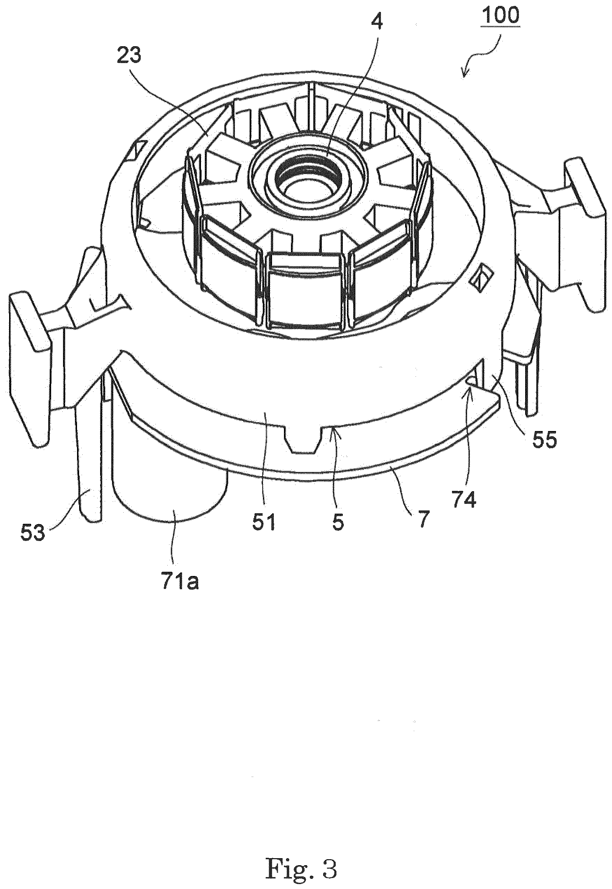

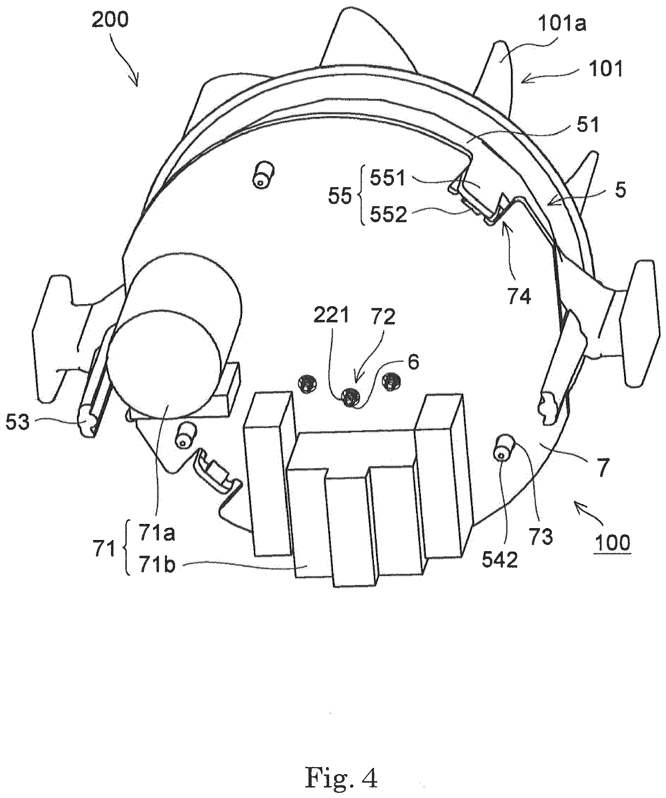

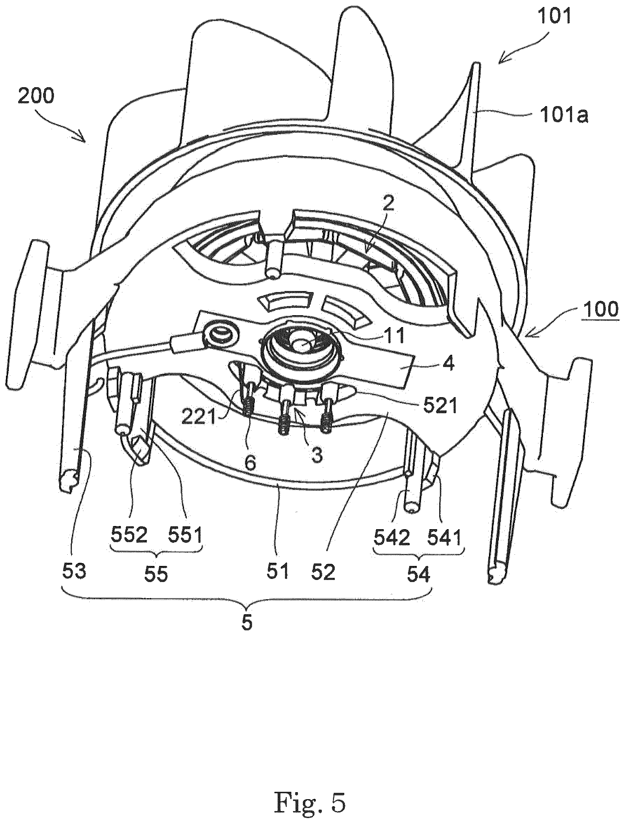

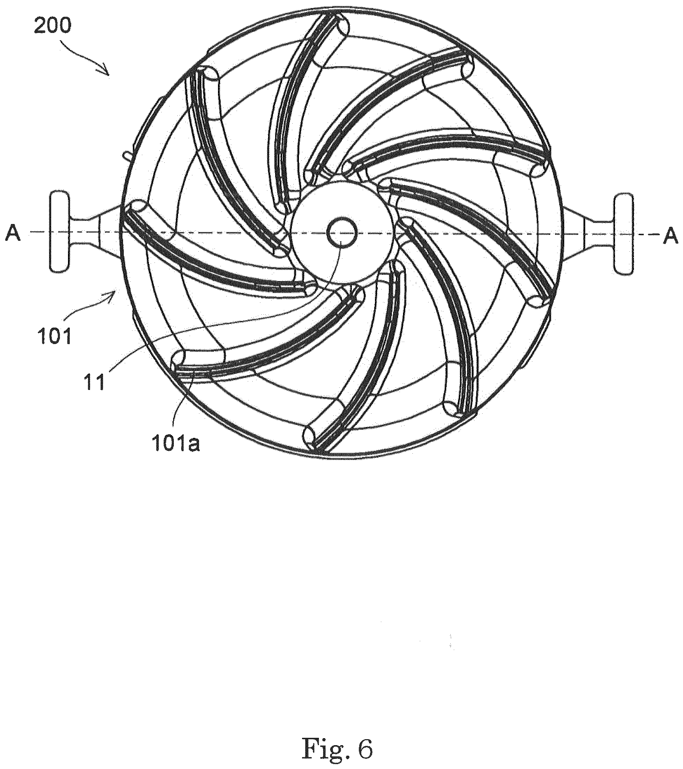

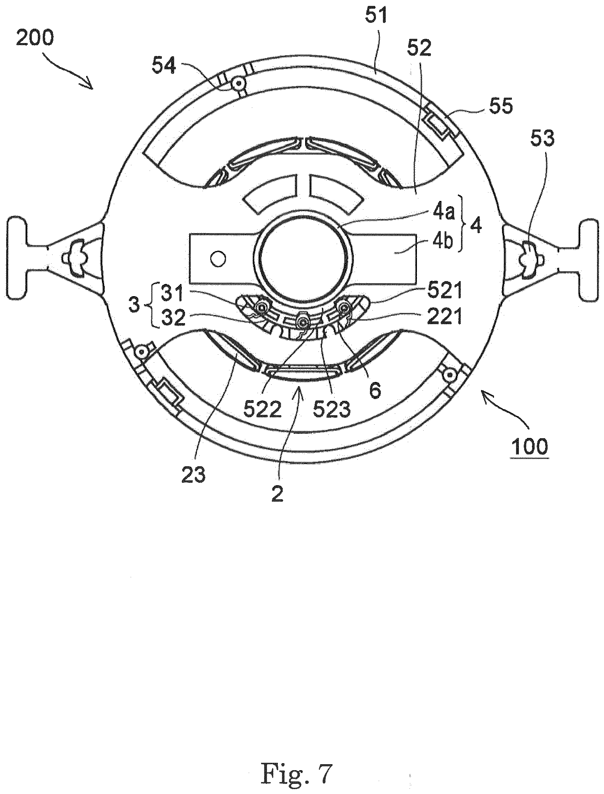

Fig. 1 is a longitudinal sectional view illustrating an example of the configuration of the air blowing device 200 using the motor 100. Fig. 2 is a top perspective view of the air blowing device 200. Fig. 3 is a top perspective view of an air blowing device 200 with the impeller 101 removed. Fig. 4 is a bottom perspective view of the air blowing device 200. Fig. 5 is a bottom perspective view of the air blowing device 200 with a circuit board 7 removed. Fig. 6 is a top view of the air blowing device 200. Fig. 7 is a bottom view of the air blowing device 200. Note that Fig. 1 illustrates a cross-sectional structure taken along a dashed dotted line A - A in Fig. 6.

According to the present embodiment, as illustrated in Fig. 1, the air blowing device 200 includes the motor 100 of an outer rotor type and the impeller 101. The impeller 101 is a vane wheel attached to an upper portion of the motor 100. The impeller 101 includes a plurality of vane members 101a and a peripheral wall member 101b. The impeller 101 is driven for rotation about the shaft 11 by the motor 100 to generate an air flow.

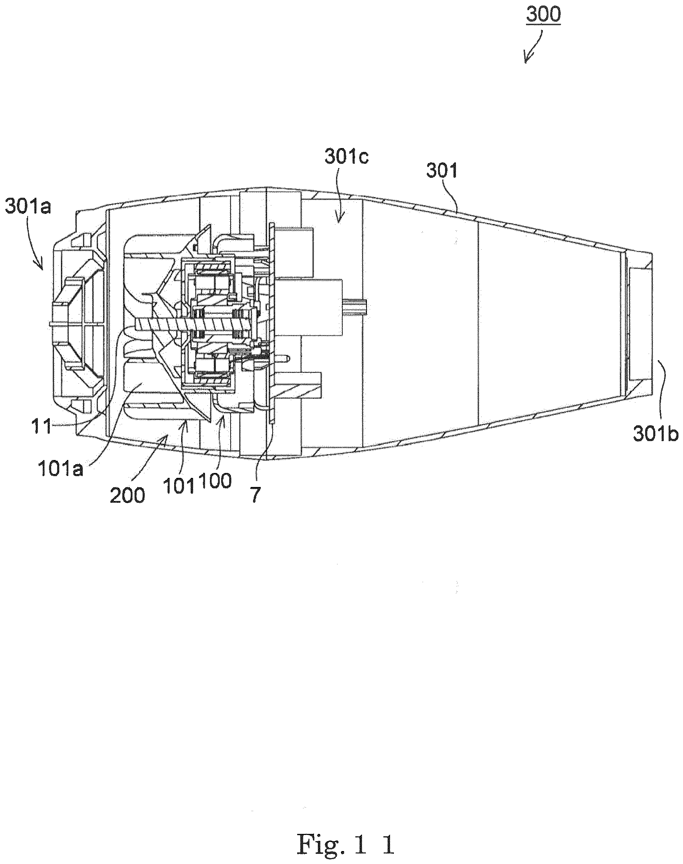

The motor 100 is a drive unit that rotationally drives the impeller 101. The motor 100 is mounted in electrical equipment, such as a dryer 300 (refer to Fig. 11 described below). The motor 100 does not include a position detection sensor, such as a Hall IC. Accordingly, the position (that is, the rotation angle) of the rotor 1 is detected by a position detection circuit described below. If such a sensorless configuration is employed, the need for a circuit board having a Hall IC mounted thereon can be eliminated in the bracket 5 of the motor 100, for example. Thus, the size of the bracket 5 can be reduced. The position detection circuit is mounted on the circuit board 7 having electronic components 71, such as an electrolytic capacitor 71a and a choke coil 71b, mounted thereon. The electronic components 71 are described in more detail below. In other words, according to the present embodiment, the number of circuit boards 7 is one. That is, no circuit boards other than the circuit board 7 having the electronic components 71, such as the electrolytic capacitor 71a and the choke coil 71b, mounted thereon are provided. Thus, the size of the motor 100 can be reduced.

As illustrated in Fig. 1, the motor 100 includes the rotor 1, a stator 2, a bearing holder 4, a bracket 5, a wire wrapping pin 6, and the circuit board 7 having the electronic components 71 mounted thereon.

The rotor 1 is the rotor of the motor 100. The rotor 1 has the shaft 11, a rotor holder 12, and a magnet 13. The shaft 11 is a rotary shaft extending in both upward and downward axial directions. The rotor holder 12 is a member that holds the magnet 13 and is rotatable together with the shaft 11 and the impeller 101. The magnet 13 faces the stator 2.

The rotor holder 12 accommodates the rotor 1, the stator 2, and the bearing holder 4. The rotor holder 12 has a plate portion 121 and a cylindrical portion 122. The plate portion 121 is a disk-shaped member extending in an outward radial direction. The cylindrical portion 122 is a cylindrical member extending from the circumferential edge of the plate portion 121 in the axially downward direction. The peripheral wall member 101b of the impeller 101 is attached to the cylindrical portion 122 so as to be located radially outwardly of the cylindrical portion 122. The magnet 13 is held on the inside surface of the cylindrical portion 122.

The stator 2 is an armature of the motor 100. The stator 2 is held on the outside surface of the bearing holder 4. The stator 2 faces the rotor 1 and drives the rotor 1. The stator 2 includes a stator core 21, a plurality of coil portions 22, and an insulator 23.

The stator core 21 is a laminated steel plate in which electromagnetic steel plates are stacked in the axial direction. The stator core 21 is provided radially outwardly of the bearing holder 4 and radially inwardly of the magnet 13.

As illustrated in Fig. 5, each of the coil portions 22 is a wire wound member in which a conductor wire (for example, a lead wire 221) is wound around the insulator 23. The coil portions 22 are arranged in the circumferential direction. An end portion of the lead wire 221 is tied to the wire wrapping pin 6 with the insulating layer peeled off. Note that the wire wrapping pin 6 is a terminal for electrically connecting the coil portion 22 with the circuit board 7.

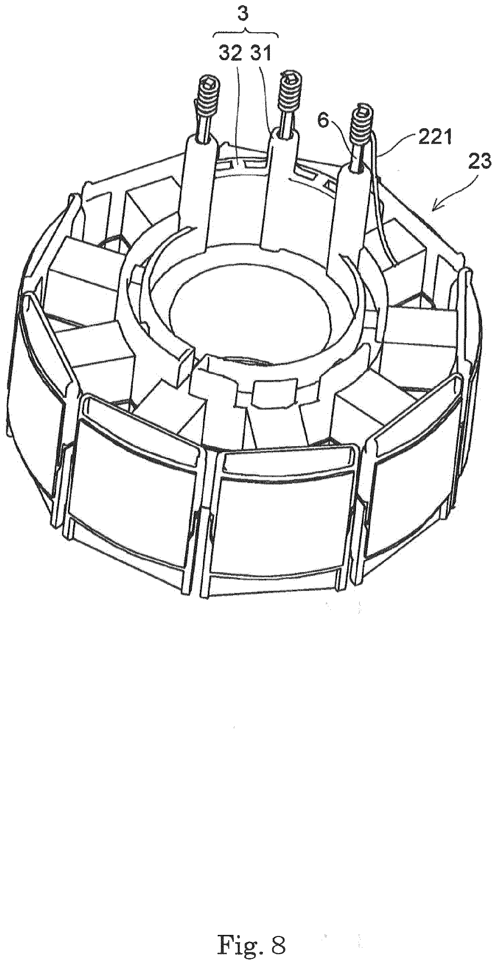

The insulator 23 is an insulating member made of, for example, a resin material. The insulator 23 covers the stator core 21. The insulator 23 electrically insulates the stator core 21 from the coil portion 22. In addition, the insulator 23 has a support member 3 for supporting the wire wrapping pin 6. The support member 3 protrudes from the lower end of the insulator 23 toward the circuit board 7. The support member 3 has terminal supporting portion 31 and a connection portion 32. The terminal supporting portion 31 supports one of the wire wrapping pins 6. The connection portion 32 connects the adjacent terminal supporting portions 31 with each other (refer to, for example, Fig. 8). The structure of the support member 3 is described in more detail below.

The bearing holder 4 is a metal bearing holding portion for holding the bearings 41 and 42. The bearing holder 4 is provided radially outward of the shaft 11 and radially inward of the stator 2. The bearings 41 and 42 are bearings which support the shaft 11 for rotation. For example, ball bearings or sleeve bearings are used as the bearings 41 and 42.

The bearing holder 4 has a cylindrical portion 4a extending in the axial direction and a rectangular plate portion 4b. The bearings 41 and 42 are held inside the cylindrical portion 4a. The plate portion 4b extends radially outward from the lower circumference of the cylindrical portion 4a. In the axial direction, the position of the lower surface of part of the plate portion 4b close to the cylindrical portion 4a is the same as the position of the lower surface of the bracket 5. In addition, the upper surface and the lower surface of both end portions of the plate portion 4b in the long direction are clamped by the bracket 5. In this way, the bearing holder 4 is held by the bracket 5. According to the present embodiment, the plate portion 4b and the cylindrical portion 4a are separate members, but may be a single member. That is, the plate portion 4b may extend radially outward from the lower end of the cylindrical portion 4a.

The bracket 5 holds the bearing holder 4. As illustrated in Fig. 5, for example, the bracket 5 includes a cylindrical member 51, a holding member 52 for holding the bearing holder 4, a pair of motor fixing members 53 for fixing the motor 100, three board supporting portions 54, and two hook members 55.

The cylindrical member 51 is provided radially outwardly of the rotor holder 12 and the peripheral wall member 101b of the impeller 101. The cylindrical member 51 accommodates the lower portions of the stator 2 and the bearing holder 4. The pair of motor fixing members 53 is provided on the outside surface of the cylindrical member 51. In addition, the three board supporting portions 54 and the two hook members 55 are provided at the lower end of the cylindrical member 51 in the axial direction of the cylindrical member 51.

The holding member 52 holds the plate portion 4b. The holding member 52 has a portion extending in the long direction and a portion extending in the short direction. According to the present embodiment, the holding member 52 is a rectangular plate member. However, the holding member 52 is not limited to this example. The holding member 52 may have another shape, such as an oval shape. In a plan view as viewed from the axial direction, both ends in the long direction of the holding member 52 are joined to the cylindrical member 51 at two points where the pair of motor fixing members 53 are joined to the cylindrical member 51.

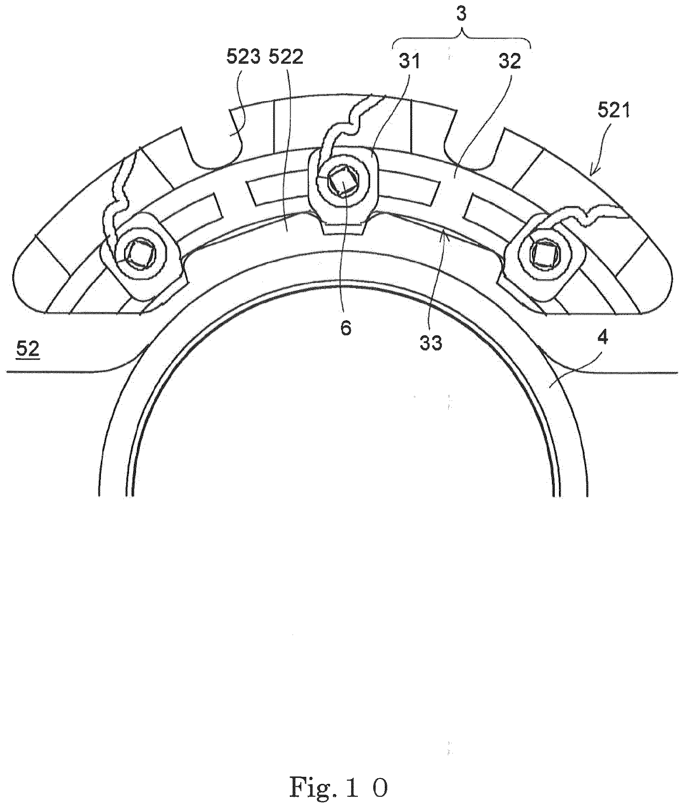

As illustrated in Fig. 7, the holding member 52 has a connection opening 521, two first protrusions 522, and two second protrusions 523. The connection opening 521 penetrates the holding member 52 from the upper surface to the lower surface. The first protrusions 522 and the second protrusions 523 are provided on the peripheral edge of the connection opening 521 (refer to Fig. 10 described below). The structure of the first protrusion 522 and the second protrusion 523 is described in more detail below.

The pair of motor fixing members 53 is attached to the electrical equipment having the air blowing device 200 mounted thereon (for example, the dryer 300 described below). The motor 100 is fixed to the electrical equipment through the attachment of the pair of motor fixing members 53. In the plan view as viewed from the axial direction, the two motor fixing members 53 are respectively joined to the cylindrical member 51 at two points of the circumferential edge of the lower end of the cylindrical member 51, where the two points are across from each other with the shaft 11 therebetween.

In the plan view as viewed from the axial direction, the board supporting portions 54 are provided on the circumferential edge of the lower end of the cylindrical member 51 at three positions. Each of the board supporting portions 54 has a stopper portion 541 and a pillar portion 542 (refer to Fig. 5). The stopper portion 541 protrudes from the circumferential edge of the lower end of the cylindrical member 51 in the downward axial direction. The pillar portion 542 is provided radially inwardly of the stopper portion 541 and on the inside surface of the cylindrical member 51. The pillar portion 542 protrudes in the downward axial direction beyond the lower end of the stopper portion 541.

In the plan view as viewed from the axial direction, the hook members 55 are provided on the circumferential edge of the lower end of the cylindrical member 51 at two positions. Preferably, the hook members 55 are provided at two positions across from each other with the shaft 11 therebetween. Each of the hook members 55 has an extension portion 551 and a claw portion 552 (refer to Fig. 5). The extension portion 551 extends from the circumferential edge of the lower end of the cylindrical member 51 to the circuit board 7 in the downward axial direction. The claw portion 552 protrudes radially inwardly from the inside surface of the extension portion 551.

The bracket 5 is formed by injection molding using a resin material, for example. The holding member 52 is the same resin member as the cylindrical member 51, the motor fixing member 53, the board supporting portion 54, and the hook member 55. In addition, the holding member 52 is provided around the plate portion 4b (in particular, both end portions in the long direction) of the bearing holder 4. Consequently, the number of parts and the assembling steps can be reduced more than in the case where the holding member 52 is a member different from the cylindrical member 51, the motor fixing member 53, the board supporting portion 54, and the hook member 55.

In the plan view as viewed from the axial direction, a portion of the holding member 52 that extends in the long direction is parallel to, for example, a line segment extending between the middle of a portion of the circumferential edge of the lower end of the cylindrical member 51 to which one of the motor fixing members 53 is joined and the middle of a portion to which the other motor fixing member 53 is joined. That is, in the plan view as viewed from the axial direction, both ends of the portion of the holding member 52 extending in the long direction are respectively joined to the cylindrical member 51 at the above-mentioned two positions. As compared with a holding member joined to the entire circumference of the cylindrical member 51, the holding member 52 joined to the cylindrical member 51 at only the above-mentioned two positions of the cylindrical member 51 more easily dissipates vibration transferred to the bracket 5. For this reason, as compared with a holding member joined to the entire circumference of the cylindrical member 51, the holding member 52 joined to the cylindrical member 51 at only the above-mentioned two positions of the cylindrical member 51 can reduce the eigenvalue (the vibration frequency) generated in the bracket 5. In addition, the mounting strength of the motor 100 attached to the electrical equipment can be increased.

The circuit board 7 is, for example, a disk-shaped board made of a resin material, such as epoxy. The circuit board 7 is disposed at a position away from the holding member 52 in the downward axial direction. For example, as illustrated in Fig. 4, the circuit board 7 has three first holes 72, three second holes 73, and two notches 74. The first holes 72 and the second holes 73 are through-holes penetrating the circuit board 7 in the axial direction. The notches 74 are formed at two positions on the circumferential edge of the circuit board 7, where the two positions are across from each other. When the motor 100 is assembled, the wire wrapping pin 6 is inserted into the first hole 72 and is connected to the circuit board 7. Each of the pillar portions 542 of the board supporting portions 54 is inserted into one of the second holes 73 until the upper surface of the circuit board 7 is brought into contact with the lower end of the stopper portion 541. In this manner, the mounting position of the circuit board 7 mounted on the bracket 5 in the axial direction is determined. The claw portion 552 of each of the hook members 55 is hooked on one of the notches 74. In this way, the circuit board 7 is attached to the bracket 5 in a so-called snap-fit manner.

As illustrated in Fig. 4, the electronic components 71 are provided on the lower surface of the circuit board 7. The electronic components 71 include circuits not illustrated in Fig. 4, that is, an AC/DC converter, an inverter, a control circuit, a position detection circuit, and the like. The AC/DC converter is a conversion circuit for converting AC power supplied from, for example, a commercial power source (not illustrated) into DC power. The AC/DC converter includes, for example, relatively large and heavy elements, such as the electrolytic capacitor 71a and the choke coil 71b. The electrolytic capacitor 71a is an electric storage element that stores a relatively large amount of electrical charge. The choke coil 71b is a wire wound member having a wire wound around an iron core. The choke coil 71b functions as a noise filter for removing noise in the power supplied from the power source to the motor 100. The inverter is a power supply circuit that supplies the power to the stator 2. The inverter generates the power to be supplied by using the DC power output from the AC/DC converter. The control circuit controls driving of the motor 100.

The position detection circuit is a detection unit that detects the position (that is, the rotation angle) of the rotor 1 on the basis of the induced voltages generated in the coil portions 22 of the stator 2 due to the rotation of the rotor 1. Note that the induced voltages are voltages generated in the coil portions 22 by the magnetic force of the magnet 13 when the rotor 1 rotates. For example, the position detection circuit detects the induced voltage generated in each of the coil portions 22 and detects the zero cross of the detected voltage. That is, the position detection circuit further detects the time at which the detected voltage exceeds 0 [V] and the tendency of the voltage increase/decrease at this time. Thereafter, the position detection circuit detects the rotation angle of the rotor on the basis of the result of detection.

By setting the circuit board 7 below the holding member 52 in the axial direction, the need for setting a circuit board having electronic components mounted thereon between the stator 2 and the bracket 5 is eliminated. Thus, the size of the motor 100 can be reduced.

If the electronic components 71 are mounted on the lower surface of the circuit board 7, the shortest distance between the stator 2 and the circuit board 7 can be made shorter than when the electronic components 71 are mounted on the upper surface of the circuit board 7. In addition, even when an element having a relatively large size in the axial direction (e.g., the electrolytic capacitor 71a used in, in particular, the AC/DC converter) is mounted on the circuit board 7, the shortest distance between the stator 2 and the circuit board 7 need not be increased. In this way, the occurrence of breaking of a wire (in particular, the lead wire 221) between the stator 2 and the circuit board 7 can be reduced or prevented.

The electronic components 71 including, for example, an AC/DC converter, an inverter, a control circuit, and a position detection circuit are mounted on the same circuit board 7. In this manner, the number of parts (for example, the total number of circuit boards 7) can be reduced more than in a motor using a plurality of circuit boards and, thus, the manufacturing cost can be reduced.

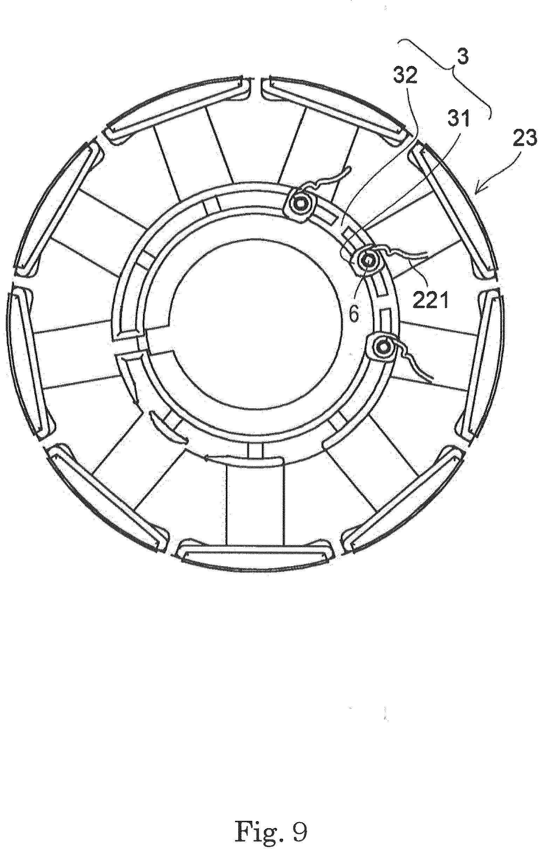

A specific structure of the support member 3 is described below. Fig. 8 is a bottom perspective view of the insulator 23. Fig. 9 is a bottom view of the insulator 23. Fig. 10 is an enlarged bottom view illustrating an example of the structure in which the first protrusions 522 and the second protrusions 523 are in contact with the support member 3. Note that the upward and downward axial directions in Fig. 8 differ from those in other figures. That is, the upward axial direction in Fig. 8 corresponds to the downward axial direction, and the downward axial direction in Fig. 8 corresponds to the upward axial direction.

The support member 3 is a support member for supporting the wire wrapping pins 6. The support member 3 protrudes from the lower end of the insulator 23. The wire wrapping pins 6 are stably supported by the support member 3. As a result, the occurrence of breaking of the wires (in particular, the lead wire 221) between the coil portion 22 and the circuit board 7 due to the vibration of the motor 100 can be reduced or prevented more effectively.

The support member 3 is disposed in the connection opening 521 in a plan view as viewed from the axial direction (refer to Fig. 7). The support member 3 extends through the connection opening 521 in the axial direction. The wire wrapping pins 6 extend from the top end of the support member 3 in the downward axial direction and are inserted into the first holes 72 of the circuit board 7, respectively, and are soldered to the circuit board 7. In addition, the coil portions 22 can be electrically connected to the wiring pattern of the circuit board 7 through the connection opening 521. Thus, since the lengths of the wires (in particular, the lead wire 221) between the coil portion 22 and the circuit board 7 can be reduced, the occurrence of breaking of the lead wire 221 can be reduced or prevented more effectively.

The support member 3 has three terminal supporting portions 31 and two connection portions 32. Note that the present invention is not limited to this example, and the number of the terminal supporting portions 31 may be any plural number other than three. Each of the terminal supporting portions 31 is a member for supporting the wire wrapping pin 6 and protrudes from the insulator 23 toward the circuit board 7. Each of the connection portions 32 connects the adjacent terminal supporting portions 31. In the radial direction, the radial width of the connection portion 32 is smaller than the radial width of the terminal supporting portion 31. As a result, in a plan view as viewed from the axial direction, the inside surface of the connection portion 32 forms a recess 33 together with the inside surfaces of the two adjacent terminal supporting portions 31, as illustrated in Fig. 10.

In the holding member 52, the first protrusions 522 and the second protrusions 523 are provided on the circumferential edge of the connection opening 521. The first protrusions 522 protrude from the circumferential edge of the connection opening 521 in the outward radial direction and are in contact with the support member 3. The second protrusions 523 protrude from the circumferential edge of the connection opening 521 in the outward radial direction and are in contact with the support member 3. More specifically, as illustrated in Fig. 10, in a plan view as viewed in the axial direction, the first protrusions 522 are in contact with the inside surface of the connection portion 32 (that is, the bottom surfaces of the recesses 33), and the second protrusions 523 are in contact with the outside surface of the connection portion 32.

In this manner, the displacement of the support member 3 in both the inward radial direction and outward radial direction is suppressed. Consequently, a decrease in the strength of the support member 3 due to the vibration of the motor 100 can be reduced or prevented. In addition, the vibration of the motor 100 transferred from the holding member 52 via the first protrusions 522 and the second protrusions 523 can be reduced by the connection portion 32 and, thus, the vibration is less likely to be transferred to the terminal supporting portion 31. As a result, a decrease in the strength of the wire (in particular, the lead wire 221) between the coil portion 22 and the circuit board 7 due to the vibration of the wire wrapping pins 6 can be reduced.

The holding member 52 having the first protrusions 522 and the second protrusions 523 is a resin member. Consequently, even when the first protrusions 522 and the second protrusions 523 push the support member 3 due to the vibration of the motor 100, the force that pushes the support member 3 is reduced due to the elasticity of the holding member 52 having the first protrusions 522 and the second protrusions 523. As a result, a decrease in the strength of the support member 3 due to the vibration of the motor 100 can be reduced or prevented.

It is desirable that in a plan view as viewed from the axial direction, the first protrusions 522 and the second protrusions 523 be in point contact with the inside surface and the outside surface of the connection portion 32, respectively. In addition, in a plan view as viewed from the axial direction, the points of the inside surface of the connection portion 32 with which the first protrusion 522 is in contact may be single, and the points of the outside surface of the connection portion 32 with which the second protrusion 523 is in contact may be single. However, it is more desirable that the points be plural. For example, in Fig. 10, the first protrusions 522 are in contact with the inside surface of the connection portion 32 at four points, and the second protrusions 523 are in contact with the outside surface of the connection portion 32 at two points. In this way, if the holding member 52 is in point contact with the support member 3 at a plurality of points, the vibration transferred from the first protrusion 522 or the second protrusion 523 to the support member 3 can be reduced. Furthermore, since the eigenvalue (the vibration frequency) of the motor 100 does not overlap the eigenvalue (the vibration frequency) of the electrical equipment having the motor 100 mounted therein, the resonance that occurs between the motor 100 and the electrical equipment can be suppressed. Note that according to the present embodiment, the number of points at which the first protrusions 522 are in contact with the inside surface of the connection portion 32 and the number of points at which the second protrusions 523 are in contact with the outside surface of the connection portion 32 are not limited to the numbers described above. The numbers are any numbers appropriate to suppress the resonance that occurs between the motor 100 and the electrical equipment.

The dryer 300 is described below. The dryer 300 is an example of application of the electrical equipment having the air blowing device 200 including the above-described motor 100 according to the present embodiment. Fig. 11 is a longitudinal sectional view illustrating an example of the configuration of the dryer 300 having the air blowing device 200 mounted therein. Note that the air blowing direction of the dryer 300 corresponds to the downward axial direction of the motor 100. In addition, the direction opposite to the air blowing direction of the dryer 300 corresponds to the upward axial direction of the motor 100.

Subsequently, the dryer 300 is electrical equipment for blowing out hot air. The dryer 300 rotates the impeller 101 of the air blowing device 200 by using the rotary drive of the motor 100 and sends an air flow frontward in the air blowing direction. The dryer 300 heats the air flow sent in the forward air blowing direction with a heater and discharges the heated air flow (that is, hot air) to the outside. The dryer 300 is used as, for example, a hairdryer for home or business use that dries hair. However, the dryer according to the present invention may be a dryer for drying or heating something other than hair, such as an industrial dryer.

As illustrated in Fig. 11, the dryer 300 includes the air blowing device 200 having the motor 100, a dryer housing 301, a flow rectifier member (not illustrated), and a heater (not illustrated).

The dryer housing 301 is a casing of the dryer 300. The dryer housing 301 includes an air inlet 301a, an air outlet 301b, and an internal space 301c. The air inlet 301a is disposed in a rear portion of the dryer housing 301 in the air blowing direction. The air outlet 301b is provided in a front portion of the dryer housing 301 in the air blowing direction. The air inlet 301a and the air outlet 301b communicate with the internal space 301c of the dryer housing 301. The air blowing device 200 using the motor 100, the flow rectifier member, and the heater are disposed in the internal space 301c.

The impeller 101 of the air blowing device 200 is disposed in the rear portion in the air blowing direction, and the motor 100 is disposed in the front portion in the air blowing direction. The axial direction of the air blowing device 200 is parallel to the air blowing direction of the dryer 300. The upward axial direction corresponds to a direction opposite to the air blowing direction. The downward axial direction corresponds to the air blowing direction.

The flow rectifier member has a plurality of stator vanes (not illustrated) arranged in the circumferential direction of the motor. Each of the stator vanes is provided radially outward of the motor 100, that is, between the motor 100 and the dryer housing 301.

The heater is provided between the air blowing device 200 and the air outlet 301b. The heater is a heating member for heating an air flow. The heater has a heating wire, such as a nichrome wire, which generates heat by passing an electric current therethrough.

When the power switch (not illustrated) of the dryer 300 is switched on, the air blowing device 200 is activated. By rotation of the impeller 101, the air blowing device 200 generates an air flow flowing from the outside of the dryer housing 301 into the internal space 301c through the air inlet 301a. The air flow flowing into the internal space 301c is sent from the air blowing device 200 in the outward radial direction by the rotation of the impeller 101. The air flow is guided to between the plurality of stator vanes by the inner surface of the internal space 301c and is sent toward the heater. The air flow flowing around the heater is heated by the heater. Thereafter, the heated air flow is blown out from the air outlet 301b.

The embodiments of the present invention have been described above. It should be noted that the scope of the present invention is not limited to the above-described embodiments. The present invention can be implemented with various modifications without departing from the spirit and scope of the invention. Furthermore, the above-described embodiments can be combined in any way as appropriate.

For example, while the above embodiment has been described with reference to the motor 100 of an outer rotor type, the type of motor is not limited to this example. The motor may be of an inner rotor type.

In addition to the dryer (refer to Fig. 11), the present invention is applicable to other air blowing devices, such as an electric fan and a ventilation fan. Furthermore, the present invention is applicable to a small air-intake device, such as a handy cleaner, and electrical equipment for other applications, such as a hair curler.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A motor comprising:
a rotor (1) including a rotary shaft (11) that extends in the vertical direction;
a stator (2) that faces the rotor (1);
a bearing (41, 42) for supporting the rotary shaft (11) for rotation;
a bearing holder (4) for holding the bearing (41, 42);
a bracket (5) for holding the bearing holder (4); and
a circuit board (7) having electronic components (71) mounted thereon,
wherein the electronic components (71) include a converter, an inverter, and a detection unit,
wherein the detection unit is configured to detect the rotation angle of the rotor (1) on the basis of an induced voltage generated in the stator (2) due to rotation of the rotor (1),
wherein the bracket (5) includes a holding member (52) that holds the lower end of the bearing holder (4),
wherein the circuit board (7) is disposed under the holding member (52) in the axial direction, and
wherein the electronic components (71) are disposed on the lower surface of the circuit board (7).

2. The motor according to Claim 1, wherein the stator (2) includes a stator core (21), an insulator (23) that covers the stator core (21), and a coil portion (22) formed by winding a conductive wire around the insulator (23),
wherein the insulator (23) includes a support member (3) that protrudes toward the circuit board (7), and the support member (3) supports a terminal (6) that electrically connects the coil portion (22) with the circuit board (7).

3. The motor according to Claim 2, wherein the holding member (52) has a connection opening (521) that penetrates the holding member (52) in the axial direction, and the support member (3) passes through the connection opening (521) .

4. The motor according to Claim 3, wherein the holding member (52) further includes a first protrusion (522) and a second protrusion (523),
wherein the first protrusion (522) protrudes from the peripheral edge of the connection opening (521) outward in a radial direction and is in contact with the support member (3), and
wherein the second protrusion (523) protrudes from the peripheral edge of the connection opening (521) inward in the radial direction and is in contact with the support member (3).

5. The motor according to Claim 4, wherein the support member (3) has a plurality of terminal supporting portions (31) that support the terminal (6) and connection portions (32) each connecting the terminal supporting portions (31) adjacent to each other, and
wherein the first protrusion (522) is in contact with the inside surface of the connection portion (32) that faces inward in a radial direction, and the second protrusion (523) is in contact with the outside surface of the connection portion (32) that faces outward in the radial direction.

6. The motor according to Claim 5, wherein in a plan view as viewed from the axial direction, the first protrusion (522) is in point contact with the inside surface of the connection portion (32).

7. The motor according to Claim 5 or 6, wherein in a plan view as viewed from the axial direction, the first protrusion (522) is in contact with the inside surface of the connection portion (32) at a plurality of points.

8. The motor according to any one of Claims 5 to 7, wherein in a plan view as viewed from the axial direction, the second protrusion (523) is in point contact with the outside surface of the connection portion (32).

9. The motor according to any one of Claims 5 to 8, wherein in a plan view as viewed from the axial direction, the second protrusion (523) is in contact with the outside surface of the connection portion (32) at a plurality of points.

10. The motor according to any one of Claims 1 to 9, wherein the holding member (52) is a resin member.

11. The motor according to any one of Claims 1 to 10, wherein the bracket (5) further includes a cylindrical member (51),
wherein the cylindrical member (51) accommodates at least part of the stator (2), and
wherein each of the holding member (52) and the cylindrical member (51) is part of the same member.

12. The motor according to Claim 11, wherein the bracket (5) further includes a pair of motor fixing members (53) for fixing the motor to electrical equipment, and
wherein in a plan view as viewed from the axial direction, the two motor fixing members (53) are joined to the circumferential edge of the lower end of the cylindrical member (51) at two positions across from each other,
wherein the holding member (52) has a shape having a long direction and a short direction, and
wherein one end of the holding member (52) in the long direction is joined to the cylindrical member (51) at one of the two positions, and the other end is joined to the cylindrical member (51) at the other position.

13. Electrical equipment comprising:
the motor according to any one of Claims 1 to 12.
